# EUROPEAN PATENT APPLICATION

(11) **EP 4 628 271 A1**
(43) Date of publication of application: **08.10.2025**
(21) Application number: 25168406.4
(22) Date of filing: 03.04.2025
(51) Int. Cl.: B29B 17/00, B29B 17/04, B29L 31/00

(54) **METHOD OF FORMING A BUILDING MATERIAL**

(30) Priority: 04.04.2024 US 202463574625 P; 10.05.2024 US 202463645682 P; 13.01.2025 US 202563744703 P; 31.03.2025 US 202519096070
(71) Applicant: Carlisle Construction Materials, LLC, Carlisle PA 17013 (US)
(72) Inventor: MOUNTAIN, Gregory, Newville, PA 17241 (US); SHERRER, Wesley, Eureka, MO 63025 (US); RAMACHANDRA, Sunil, Lancaster, PA 17601 (US); OLIVIO, Jordan, Carlisle, PA 17015 (US); ZHANG, Xuan, Carlisle, PA 17013 (US); NORIEGA OSORES, Nicolas, Carlisle, PA 17013 (US); SHENOY, Anil, Mechanicsburg, PA 17050 (US)
(74) Representative: Mewburn Ellis LLP

(57) **Abstract**

A method of forming a building material by: supplying a shredded or granulated thermoplastic material having post-industrial or post-consumer use thermoplastic material; and then heating and compressing the shredded or granulated thermoplastic material to form a rigid building material.

## Description

### Related Applications:

The present application claims priority to U.S. Provisional Patent Application Serial No. 63/574,625, entitled Recycled Roof Board, filed April 4, 2024, and to U.S. Provisional Patent Application Serial No. 63/645,682, also entitled Recycled Roof Board, filed May 10, 2024, and to U.S. Provisional Patent Application Serial No. 63/744,703, entitled System For Recycling Polyiso Insulation Using Polymer Binder, filed January 13, 2025, the entire disclosures of which are incorporated herein by reference in their entireties for all purposes.

### Technical Field:

The present invention relates to systems for recycling used thermoplastic roofing membranes including polyolefin (TPO) roofing membranes into new building materials such as roofing insulation facers, coverboard materials and wall sheathing coverboards. The present invention also relates to adding biofillers into recycled thermoplastic.

### Background of the Invention:

When TPO roofing materials have finished their normal lifespan of use, they are simply removed from buildings and are sent into landfills. Instead, it would be desirable to have systems in place for recycling these old TPO (and other) roofing membranes, preventing them from being simply discarded after reaching the end of their operational lives. In short, finding a way to recycle TPO (and other) roofing membranes into desirable new building materials would cut down on landfill pollution.

Secondly, it would also be ideal if such recycled TPO membranes could be used in other building materials and applications. This would have the advantage of keeping the recycled TPO within the same basic industry. This would simplify supply chains since the same companies and building trades that are removing the old TPO membranes would be the same ones that would be using and installing these new recycled TPO materials.

Thirdly, in the case of coverboards in particular and building materials in general, there is a need to create a low Global Warming Potential (GWP) coverboard (for roofs or walls) to reduce environmental impacts in the construction industry and combat climate change. This is because conventional cover boards, such as high-density polyisocyanurate (ISO) boards, often involve manufacturing processes that emit significant amounts of greenhouse gases, contributing to the building sector's carbon footprint. By instead developing and adopting low GWP cover boards, manufacturers could significantly reduce the emissions associated with roofing materials. These eco-friendly alternatives not only help in meeting stringent environmental regulations and sustainability goals but also appeal to the growing market demand for green building solutions. Low GWP cover boards can utilize innovative materials and production methods that minimize the release of harmful substances, thus preserving natural resources and promoting a healthier environment. Transitioning to these sustainable options is critical for advancing the construction industry's role in global efforts to mitigate climate change, ensuring that new and existing buildings contribute positively to the planet's ecological balance.

As will be shown, the present invention provides a variety of different approaches to recycle old TPO (and other) roofing membranes for use in new roofing and new building applications. Additionally, as will also be shown, the present recycled roofing membranes can be formulated to use biofillers to further reduce Global Warming Potential (GWP).

### Summary of the Invention

The present invention provides several different building materials and ways to make new building materials (including insulation facer materials, insulation coverboards, nailboards, wall sheathing boards, and systems thereof) from recycled TPO roofing membranes or from other recycled thermoplastic roofing membranes.

In one preferred aspect, the present system provides a building material product and method of producing such product, by: supplying a shredded or granulated or pulverized thermoplastic (*e.g.*: TPO) roofing material, wherein some of the shredded or granulated or pulverized thermoplastic roofing material post-industrial or post-consumer use thermoplastic material; and then heating and compressing the shredded or granulated or pulverized thermoplastic/TPO material to form a rigid building material. In preferred aspects, up to 20%, 20% to 60%, or 60% to 100% of the thermoplastic/TPO may be post-industrial or post-consumer use thermoplastic/TPO.

The advantage of the present invention is that it both minimizes landfill pollution and also provides a new building material with superior properties as compared to other polymer based coverboard and facer products. This advantage is due to the presence of fibers which are either added to the product during production and/or are already naturally present in the roofing membranes which are initially used to produce the present products. As will be shown, the present products have multiple possible uses as construction materials in the building envelope. As will be explained, the present new building material is also preferably used in roofing applications (thereby keeping the new material within the roofing industry).

One example of superior properties achieved by the present inventors was obtaining tensile strength failure of over 600psi for thin embodiments of the material. These tensile failure strengths are much better than typically achieved with similar polymers alone. One example of woven fibers already present in the material (at the start of the present process) would be PET sandwiched into the center of a standard TPO roofing membrane sheet. Advantageously, such PET fibers will remain in the shredded or granulated TPO material that is used to make the present building material. These new building products (including facers and coverboards made from these materials) can optionally be produced by extrusion.

In other preferred embodiments, additional fiber reinforcement material can be mixed into the shredded or granulated or pulverized TPO material prior to the heating and compressing step. This fiber reinforcement material may be PET or glass fiber and may be shredded or granulated scrim from the post-industrial or post-consumer use TPO material. This fiber reinforcement material that is shredded may be woven material.

In other preferred embodiments, shredded or granulated or pulverized PVC, EPDM, tire rubber PET, polyethylene, polypropylene, polystyrene, polyurethane may be mixed into the shredded or granulated thermoplastic/TPO material prior to the heating and compressing step.

In other preferred embodiments, granulated or shredded insulation material may be mixed into the shredded or granulated or pulverized thermoplastic/TPO material prior to the heating and compressing step. In such cases, the granulated or shredded insulation material is preferably between 5% and 50% of the total weight of the building material, as higher amounts may tend to reduce the mechanical strength of the resulting material.

In other preferred embodiments, a solvent or water based adhesive binder may optionally be mixed into the shredded or granulated or pulverized thermoplastic/TPO material prior to the heating and compressing step.

In other preferred embodiments, additional fillers such as carbon black, calcium carbonate, clay, titanium dioxide, barium sulfate, and silica may be used to further increase the rigidity of the embodiments, alter the color of the material, and/or decrease the flammability of the material. It is to be understood that mixing one or more of these fillers is contemplated within the scope of the present invention.

The present invention also includes a method of making the present building material by: pressing TPO material directly to form layers having a desired thickness, and then stacking these layers of TPO material together with the layers of recycled TPO material comprising some post-industrial or post-consumer use TPO material; and then heating and compressing the stacked TPO material to form a rigid building material. In preferred aspects, up to 20%, 20% to 60%, or 60% to 100% of the TPO may be post-industrial or post-consumer use TPO. Similar to the first described method above, granulated PVC, EPDM, PET or polyurethane or granulated or shredded insulation material may also be mixed into the stacked TPO material prior to the heating and compressing step. In this preferred method, the step of stacking layers of TPO material may be performed by stacking layers of TPO material having different colors such that a top surface of the building material has different color than a bottom surface of the building material. This has the advantage of providing either a dark or light material depending upon which side is facing up. This may be desired to better control the flash off time of adhesive products applied to the material. In optional preferred aspects, this approach may result in increases in the surface temperature on dark facers of up to 50F and may result in decreases in the surface temperatures on light facers up to 10F below ambient temperatures. As such, the present approach may advantageously result in double adhesive flash off speeds on cooler days and four times faster adhesive flash off on warmer days.

In various uses, the new recycled TPO building material supplied by either the first or second methods described above may be used in different applications. For example, when the present material is supplied with a thickness of 0.010 and 0.080 inches, it can be attached to any of a polyisocyanurate, foamed polyurethane, expanded polystyrene, extruded polystyrene, glass fiber, mineral fiber, or aerogel insulation material such that the building material acts as an insulation facer.

In another application, the present material can be supplied with a thickness of 0.080 and 0.75 inches for use as a coverboard or nailboard. This coverboard or nailboard my optionally be used as a roofing coverboard or nailboard, or as a wall sheathing coverboard or nailboard.

In yet another application, the present material can be supplied with a thickness of 0.080 and 0.75 inches; and then factory laminated to any of a polyisocyanurate, foamed polyurethane, expanded polystyrene, extruded polystyrene, glass fiber, mineral fiber, or aerogel insulation material such that the building material acts as a composite insulation coverboard. Preferably, the present building material is laminated to the insulation to form the insulation coverboard. Factory lamination saves applicators valuable time as opposed to field applying separate insulation and coverboard layers in the roofing or wall assembly.

In yet another application, a thermoplastic roofing membrane can be heat welded on top of this insulation coverboard or composite to form a novel attachment scheme in roofing assemblies. For example, when the thermoplastic roofing membrane is provided as two pieces of thermoplastic roofing membrane having overlapping edges, then these two pieces of thermoplastic roofing membrane can be heat welded directly onto the insulation coverboard (which is made from recycled thermoplastic/TPO). When the thermoplastic roofing membranes are also made of TPO, the heat welding will weld both of the overlapping edges together and also weld each of the two pieces of thermoplastic roofing membrane directly to the insulation coverboard therebelow. This will save valuable time for installers and simplify the roofing assembly by reducing or eliminating the need for adhesives and other means of chemical and physical attachment of the roofing membrane to the rest of the roofing system. Optionally as well, metallic particles may be mixed into the recycled coverboard (and roofing membranes). As such, the pair of overlapping edges of the two pieces of thermoplastic roofing membrane can be induction welded together and to the TPO recycled coverboard. Optionally, such metallic particles can be concentrated in the top layer(s) of the TPO recycled coverboard to promote such induction welding.

In further embodiments, the present material (when operating either as a facer or coverboard) can be textured to increase friction for foot traffic thereon or to provide additional surface area for adhesives to bond thereto.

In further embodiments, a sacrificial film which may be a polyethylene film with a rubber-based pressure sensitive adhesive (such as APEEL^{™}, made by Carlisle Construction Materials of Carlisle, Pennsylvania) can be added on top of the present facer or coverboard to protect the material from getting dirty during installation. In further embodiments, metallic particles may be included into the building material to facilitate plate-less induction welding.

Lastly, biofillers (such as sawdust, rice husks or coconut fibers) can be mixed into the building material to provide building materials having lower Global Warming Potential (GWP).

### Brief Description of the Drawings:

Fig. 1 is a photo of a 0.38 inch thick section of the present building material as manufactured by the present inventors.
Fig. 2 is a photo of the present building material laminated onto a block of insulation material as manufactured by the present inventors.
Fig. 3 is an illustration of the present building material used as an insulation coverboard, showing overlapping edges of a thermoplastic roofing membrane being heat welded together thereover.
Fig. 4A is an illustration of a plurality of old TPO membranes being stacked together to produce a building material having top and bottom sides of different colors.
Fig. 4B is a photo corresponding to Fig. 4A but showing the resulting building material as manufactured by the present inventors.
Figs. 4C and 4D are photos corresponding to Figs. 4A and 4B, showing a white topside (Fig. 4C) and a black bottom side (Fig. 4D) of the building material as manufactured by the present inventors.
Fig. 5 is a photo showing the present building material with optional air pockets formed therein as manufactured by the present inventors.
Figs. 6A, 6B and 6C are photos of coverboard building materials incorporating biofillers therein as manufactured by the present inventors.

### Detailed Description of the Drawings:

The present invention is a roofing or commercial wall sheathing coverboard produced by mixing recycled and/or waste roofing materials such as thermoplastic roofing membrane (including but not limited to TPO), and optionally polyisocyanurate insulation with or without an adhesive binder to create a rigid board product that can be used as a coverboard or nailing board for construction applications.

In some embodiments, the present building material 10 comprises post-industrial or post-consumer use TPO mixed into new TPO (for example, from 40% to 80% new TPO and from 10% to 60% post-industrial or post-consumer use TPO). Other ranges are also possible and are included within the scope of the present invention. In some other embodiments, the present building material is formed from 100% post-industrial or post-consumer use TPO. It is to be understood that the present invention encompasses various sorts of mixtures with variable percentages of new and post-industrial or post-consumer use TPO. In preferred aspects, up to 20%, 20% to 60%, or 60% to 100% of the TPO may be post-industrial or post-consumer use TPO. In other embodiments, the roofing membrane that is recycled is not a TPO roofing membrane.

In one preferred embodiment, the present system comprises a method of making a building material 10, comprising: (a) supplying a shredded or granulated thermoplastic/TPO material, wherein the shredded or granulated thermoplastic/TPO material includes some post-industrial or post-consumer use thermoplastic/TPO material; and then (b) heating and compressing the shredded or granulated thermoplastic/TPO material to form a rigid building material.

In preferred methods, the temperature that is used is sufficiently high to melt the TPO but not melt its PET reinforcing scrim. The melting point of TPO is approximately 320F and the PET melting point is approximately 500F. Therefore, temperatures between 320F and 490F are preferably used in accordance with the present system. In cases where glass reinforcement is used in the TPO (as opposed to PET), preferred temperatures over 320F would be sufficient. This is because glass melting temperature is so high that such temperatures would simply burn the TPO, and therefore such high temperatures would not be needed or attempted.

Shredding of the thermoplastic/TPO results in cut flakes that have "hairy" PET scrim protrusions extending out of the cut ends. This is advantageous because these hairy frayed ends provide excellent reinforcement when the material is heated and pressurized to be melted together. As such, this approach may be preferred to simply cutting the TPO to have clean edges (for example, cutting with blades or scissors). Alternatively, recycled TPO roof membrane can be pulverized to obtain smaller particle size particles. For example, TPO can be pulverized to 10 mesh size, or 35 mesh, or 80 mesh.

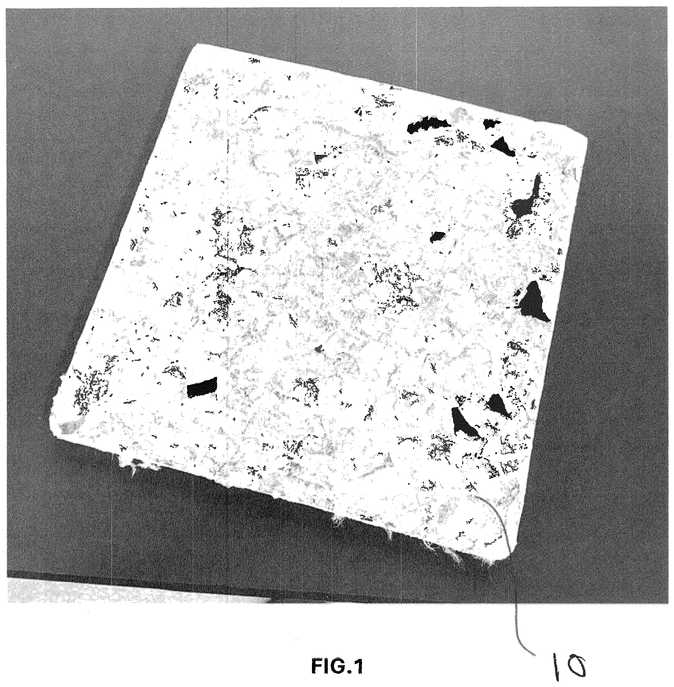

Fig. 1 shows a photo of a section of the present building material 10 as built from TPO by the present inventors. The material 10 in the photo is 0.38 inch thick. It is to be understood that the present invention covers different thicknesses (and also different uses) of the present recycled content thermoplastic building material. The present recycled content TPO building material 10 can be built to different thicknesses and these different thicknesses have different preferred uses. In preferred aspects, up to 20%, 20% to 60%, or 60% to 100% of the TPO may be post-industrial or post-consumer use TPO. As will be explained below, present building material may also include other additions mixed therein, offering other benefits, as follows.

For example, the present recycled thermoplastic/TPO building material 10 may include mixing fiber reinforcement material into the shredded or granulated thermoplastic/TPO material 10 prior to the heating and compressing step. This fiber reinforcement material may optionally be PET or glass fiber. In one exemplary aspect the fiber reinforcement material may be shredded or granulated scrim (including woven scrim) from the post-industrial or post-consumer use TPO material. The benefit of adding scrim fragments as the fiber reinforcement material is that the resulting building material will itself be stronger. One great benefit of using the scrim from the old TPO that is recycled is that it is not necessary to separate the scrim out of this recycled TPO in the first place. Instead, the old (and now shredded) scrim layer which was initially in the old TPO membrane is now used to give strength to the present new recycled TPO building material. In pre-existing recycling systems which tended to rely on extrusion processing, the presence of PET scrim tended to get stuck in the processing machinery, leading to downtime. As a result, pre-existing TPO recycling approaches had attempted to remove as much of the PET scrim as possible. In contrast, the present system of recycling specifically uses the presence of PET scrim to its advantage.

In other preferred embodiments, the present recycled thermoplastic/TPO building material 10 may be made by optionally mixing one of granulated PVC, EPDM, tire rubber, PET, polyethylene, polypropylene, polystyrene or polyurethane into the shredded or granulated TPO material prior to the heating and compressing step. The advantage of this approach is that other common roofing materials may be added into the mixture prior to heating and compression to form the final building material. This has the advantage of reducing the amounts of these additional building materials that are typically just sent to landfills. This further reduces pollution.

In other preferred embodiments, the present recycled thermoplastic/TPO building material 10 may be made by optionally mixing granulated or shredded insulation material into the shredded or granulated thermoplastic/TPO material prior to the heating and compressing step. Such granulated or shredded insulation material may preferably be between 5% and 50% of the total weight of the building material. This advantage of this approach is that it reduces the amount of insulation that is sent to landfills.

In optional preferred embodiments, a solvent or water based adhesive binder may be mixed into the shredded or granulated thermoplastic/TPO material 10 prior to the heating and compressing step. This has the advantage of making the recycled thermoplastic/TPO building material 10 hold together better. The use of an adhesive in the field can result in result in paper insulation facer and/or fiberglass insulation facer still being stuck to the thermoplastic/TPO membrane at the start of the present recycling process (i.e.: prior to shredding the thermoplastic/TPO). As a result, materials that may be present in the recycled thermoplastic/TPO material include small amounts of paper, fiberglass, foil, etc. that can amount to up to 5% by weight of the total material. Normally, these materials are simply contaminated by the use of the adhesives and are therefore currently very difficult to recycle. As a result, they currently must be discarded because they are too hard to process and put into any common recycling streams. In contrast, however, in accordance with the present system, these paper, fiberglass, and foil materials can simply be included directly into the recycling process when forming the present building material.

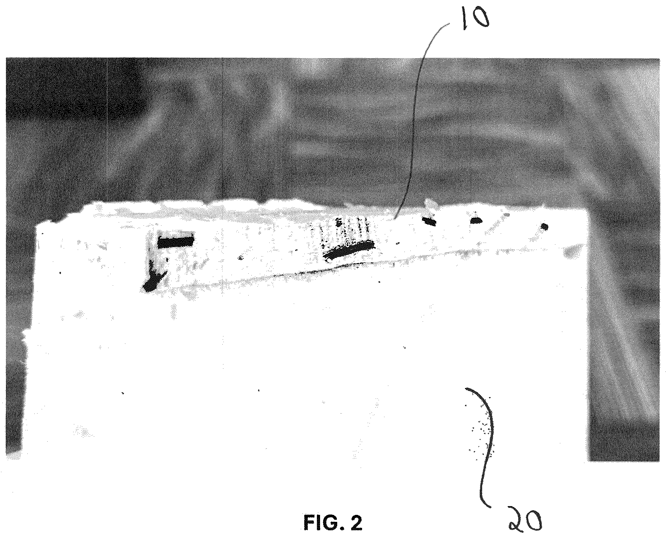

Fig. 2 illustrates the novel recycled TPO building material 10 of Fig. 1 but now laminated onto an insulation board 20 for use as a coverboard for the insulation. As will be shown herein, there are many different preferred recycled TPO material uses.

In addition to providing novel building materials 10 made from recycled post-industrial or post-consumer thermoplastic/TPO membranes, the present invention further provides novel products and uses that incorporate these novel building materials. In many cases, the preferred uses of the building material 10 correspond to the thickness of the manufactured building material. This is advantageous in that using a greater volume of old thermoplastic/TPO material results in a reduced amount of thermoplastic/TPO sent to landfills as well as yielding new building products.

In one preferred embodiment, the present system provides a method of making an insulation facer. This is accomplished by supplying the present building material 10 with a thickness between 0.010 and 0.080 inches; and then attaching the building material to any of a polyisocyanurate, foamed polyurethane, expanded polystyrene, extruded polystyrene, glass fiber, mineral fiber, or aerogel insulation material such that the building material acts as an insulation facer. It is to be understood that the present building material can itself be made using any of the methods disclosed herein.

In another preferred embodiment, the present system comprises a method of making a coverboard or nailboard. This is accomplished by simply supplying the present building material 10 with a thickness between 0.080 and 0.75 inches for use as a coverboard or nailboard. The coverboard or nailboard so manufactured is advantageously very versatile and can be used as a roofing coverboard or nailboard or as a wall sheathing coverboard or nailboard, as desired.

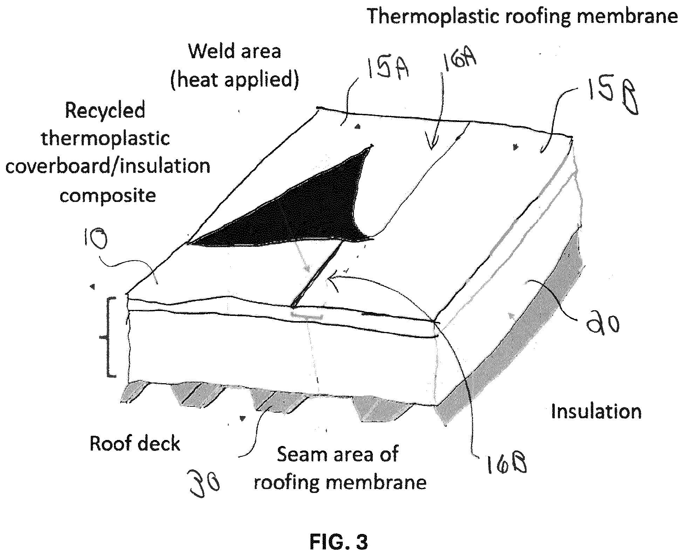

In another preferred embodiment, the present system comprises a method of making an insulation coverboard. This is accomplished by supplying the present building material 10 with a thickness between 0.080 and 0.75 inches; and then attaching the building material 10 to any of a polyisocyanurate, foamed polyurethane, expanded polystyrene, extruded polystyrene, glass fiber, mineral fiber, or aerogel insulation material (20 in Fig. 2 and 3) such that the building material acts as an insulation coverboard. In these embodiments of the invention, the building material may be laminated to the insulation to form the insulation coverboard. Alternatively, the insulation may be foamed directly onto the present building material to provide an insulation with a coverboard thereon. Such foaming may use water or some other foaming material.

In each of the above-described methods of making a facer, coverboard/nailboard or insulation coverboard, the present material can optionally be textured to increase friction for foot traffic thereon or to provide additional surface area for adhesives to bond thereto. In addition, a sacrificial film which may be a polyethylene film with a rubber-based pressure sensitive adhesive (such as APEEL^{™}, made by Carlisle Construction Materials of Carlisle, Pennsylvania) can be added on top of the facer or coverboard to protect the material from getting dirty during installation.

Also, in each of the above-described methods of making a coverboard/nailboard or insulation coverboard, the present material 10 can optionally include facers on its top and bottom made from different materials. Traditionally, top and bottom facers are made of the same material to prevent warping should the temperature change. In contrast, in accordance with the present system, the facers on the top and bottom can be made from different materials. To prevent these two facers from expanding and contracting to different amounts during temperature changes, the present system contemplates using a layered approach when designing the building material such that different layers are designed to have different thermal expansion properties. The advantage of this is that a cheaper facer (such as a paper) may be used on the bottom of the membrane.

In optional aspects, additives can be used to introduce foaming into the final product (in both of the above described shredded and stacked embodiments) to reduce the weight of the material and introduce some insulation properties into the final material. In preferred aspects, such additives may include but are not limited to: water at 0.1 - 1% by wt. or chemical blowing agents such as azodicarbonamide, in ranges of 0.1%-2% by weight or Dinitrosopentamethylenetetramine in ranges of 0.2 - 3% by weight.

In other preferred embodiments, fillers including carbon black, calcium carbonate, clay, titanium dioxide, barium sulfate, or silica may be added to further increase the rigidity of the embodiments, alter the color of the material, and/or decrease the flammability of the building material.

Fig. 3 shows an example of one novel use of the present building material, as follows. In accordance with the methods described herein, the present building material 10 is provided. In this embodiment, building material 10 is used as a coverboard and is placed onto an insulation layer 20. Coverboard/building material 10 may optionally be fastened onto insulation layer 20, for example, it may be laminated onto insulation material 20 (for example as seen in the embodiment of Fig. 2). Insulation layer 20 is secured onto the roofing deck 30 below.

In accordance with the present system, a pair of thermoplastic roofing membranes 15A and 15B are placed on top of recycled coverboard/building material 10 with their edges 16A and 16B overlapping. Roofing membranes 15A and 15B may optionally be made of recycled materials (similar to recycled coverboard/building material 10 but need not be). In preferred embodiments, each of recycled coverboard/building material 10 and roofing membranes 15A and 15B may have metallic particles mixed therein. Such metallic particles would allow for plateless induction welding of coverboard 10 to each of roofing membranes 15A and 15B. In addition, the overlapping edges 16A and 16B of roofing membranes 15A and 15B would also be welded together by induction welding. Since each of coverboard 10 and roofing membranes 15A and 15B may all have metallic particles therein, such induction welding would have the advantage of simultaneously welding overlapping edges 16A and 16B together while welding roofing membranes 15A and 15B directly to coverboard 20.

One advantage of this approach is that it is possible to induction weld at any desired location across roofing membranes 15A and 15B (as opposed to welding only at locations where induction welding plates have been pre-anchored). As such, welding continuously along a seam where overlapping edges 16A and 16B is possible, rather than only performing induction welding at pre-installed induction welding plates. A further advantage of this approach is that metallic particles would not need to be distributed evenly throughout the coverboard/building material 10. Instead, metallic particles could be concentrated in the top layers or portions of coverboard/building material 10 (or in the bottom layers or portions of roofing membranes 15A and 15B, or both). Magnetic particles would only be required at the locations where induction welding actually is occurring. This advantageously saves metallic materials as fewer metallic particles would be required.

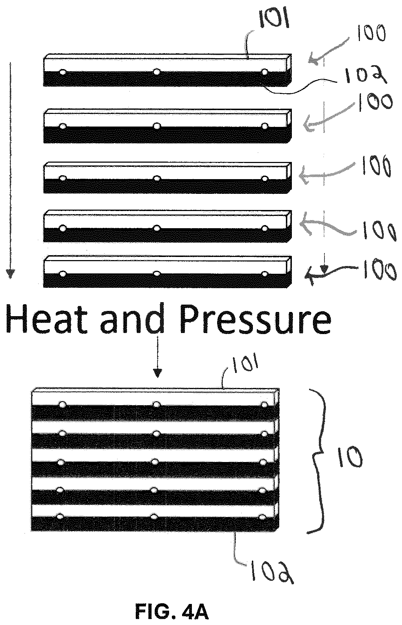

As seen in in Figs. 4A to 4D, the present invention also encompasses a method of making the present building material 10 by stacking layers 100 of TPO (or other suitable thermoplastic material), wherein some of the TPO material is post-industrial or post-consumer use TPO material; and then heating and compressing the stacked TPO material to form a rigid building material. This optional preferred method of stacking layers of recycled TPO material is described with reference to Figs. 4A to 4D. Similar to methods described above, the method of stacking layers of old recycled TPO membranes can also include mixing any one of granulated PVC, EPDM, PET or polyurethane into the shredded or granulated TPO material prior to the heating and compressing step. This preferred method can optionally include mixing granulated or shredded insulation material into the shredded or granulated TPO material prior to the heating and compressing step (preferably in concentrations of between 5% and 50% of the total weight of the building material), as described above.

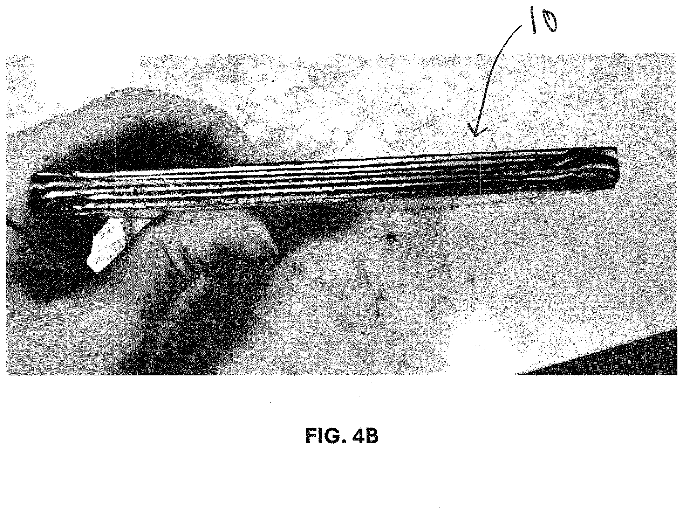

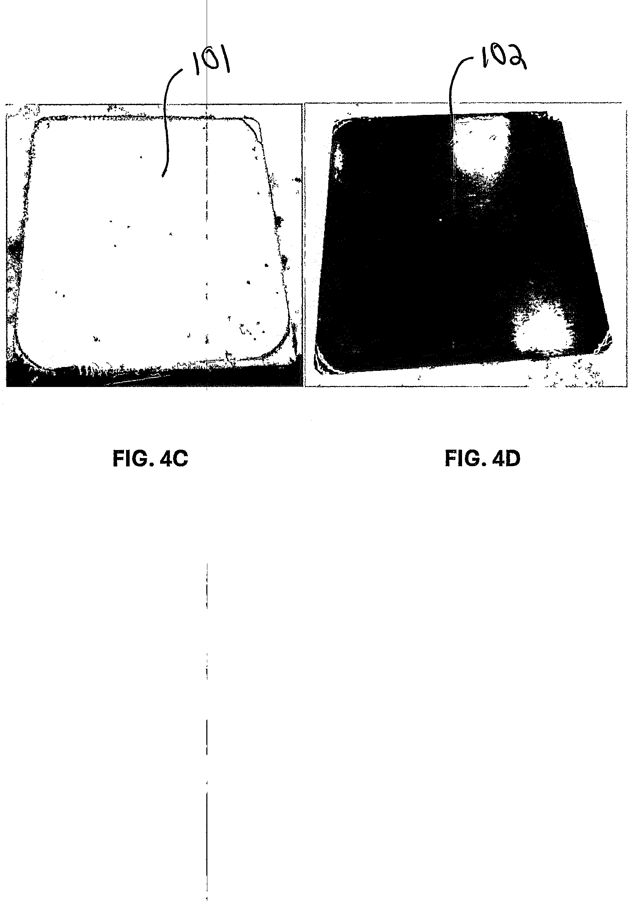

As seen in Fig. 4A, old TPO layers 100 that are white on top (white side 101) and black on their bottom (black side 102) may be stacked together. Then, under heat and compression, these layers 100 can be fused together to yield the present building material 10. In addition, having some of the PET scrim material in the initial TPO membrane results in a natural fiber weave of the membrane in the final board product. Fig. 4B is a photo that illustrates the resulting novel building material 10 as successfully manufactured by the present inventors. Figs. 4C and 4D show side-by-side views of the top 101 and bottom 102 sides of the material. As can be seen, the top side 101 is white and the bottom side 102 is black. The advantage of this stacked approach is that the roofing installer is provided with a final building material that has different colors on its top and bottom. Should the roofing installer want to install a light colored TPO membrane, (s)he simply turns the white side 101 downwards. Conversely, should the roofing installer want to install a dark colored TPO membrane, (s)he simply turns the black side 102 upwards. The advantage of having a TPO roofing membrane that can be darker or lighter as desired is that the membrane color affects the flash off time of adhesives applied to the building material membrane.

It is to be understood that although Figs. 4A to 4D illustrate many layers of two-colored TPO stacked one on top of the other, these layers don't all have to be oriented the same direction. For example, the center layers can be placed with their black and white sides up and down in any order, provided that the top side of the very top membrane is differently colored than the bottom side of the bottommost membrane.

When assembling the present building materials out of multiple layers of material (as seen in Figs. 4A to 4D), the top (i.e.: outermost) layer can optionally be optimized for melt behavior while the layers below are optimized for mechanical strength. Optionally, these different layers can be co-extruded and then laminated together. Optionally as well, the various layers of TPO can be ultrasonically welded together, and/or be ultrasonically welded to a TPO coverboard or TPO facer layer.

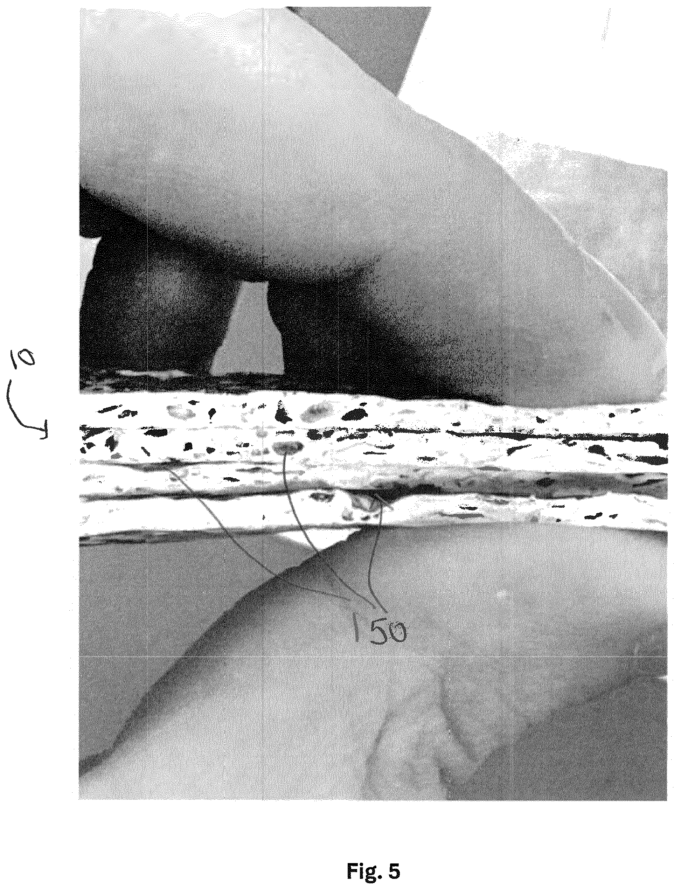

Fig. 5 shows optional air pockets 150 formed into the building material 10. These air pockets 150 were formed by residual moisture from the washing/shredding process that was left in the granules when the shredded flakes were heated and pressed together. One advantage of these optional air pockets 150 is that they make the resulting building material 10 lighter.

The above-described embodiments refer to TPO. In accordance with alternate aspects of the present invention, materials other than TPO can be used as the base material for recycling in accordance with the present invention. For example, PVC, polyethylene, polypropylene, or other suitable thermoplastic material could be used. One advantage of using PVC as the base material is that the resulting PVC facers and coverboards are desirable products.

In one preferred aspect, biofillers can be mixed into the shredded or granulated or pulverized thermoplastic material prior to the heating and compressing step. Such biofillers may optionally include sawdust, rice husks, coconut fibers, other agricultural waste, or other organic materials. As described below, optional biofillers can be mixed into a coverboard prepared according to the methods described above.

Cover boards in roofing are essential components that serve multiple purposes in building construction. These boards are installed between the insulation and the waterproof membrane to provide a stable, durable surface that enhances the overall performance and lifespan of the roof. Cover boards protect the insulation from damage due to foot traffic, heavy equipment, and weather conditions, while also improving the fire resistance and moisture protection of the roofing system. The most commonly used types of cover boards include gypsum, high-density polyisocyanurate (ISO), and cement boards. Gypsum cover boards are favored for their fire resistance, dimensional stability, and ease of installation. High-density ISO boards are popular for their high thermal performance and lightweight properties, while cement boards are chosen for their strength and impact resistance. However, all these cover boards have relatively high global warming potential (GWP). Gypsum and cement boards have high GWP due to energy-intensive manufacturing process of raw materials and board. High-density ISO boards have a relatively high GWP due to the production processes involving blowing agents with high GWP values.

The need to create a low Global Warming Potential (GWP) cover board has become increasingly urgent as the construction industry seeks to reduce its environmental impact and combat climate change. This can be accomplished by adding biofillers derived from agricultural by-products like rice husks, coconut fibers, and sawdust to enhance their mechanical properties and sustainability profile of the coverboard. The combination of recycled thermoplastic/TPO and biofillers not only lowers the GWP of the coverboards but also reduces energy consumption and greenhouse gas emissions associated with traditional manufacturing processes. This sustainable solution aligns with the growing trend towards circular economy principles in construction, where waste materials are reimagined as valuable resources, ultimately contributing to a greener and more resilient built environment.

In preferred embodiments, the thermoplastic used is from recycled roofing membranes (such as TPO membranes) as described above. It is to be understood that other sources of these thermoplastic materials can include post-consumer waste, which includes discarded plastic products such as bottles, containers, packaging materials, and single-use items that are collected through residential and commercial recycling programs. Additionally, ocean plastics, which are collected from beaches, waterways, and the ocean, represent an emerging source, helping to address marine pollution while providing valuable raw materials. Agricultural plastics, such as used greenhouse films and irrigation pipes, also contribute to the pool of recyclable plastics. By harnessing these various sources, the construction industry can reduce its reliance on virgin plastics, lower the carbon footprint of building materials, and support the broader efforts towards a circular economy.

In preferred embodiments, the present building material 10 can be used to form a coverboard comprising: (a) 30 - 70% recycled thermoplastics by weight, (b) 70 - 30% biofillers by weight; together with (c) other functional additives. In preferred aspects, biofillers can be rice husks, coconut and hemp fibers, corn stover, sawdust, etc. The more preferred range for biofillers is 35-60%. Biofillers tend to have lower density than recycled thermoplastics. When low amount of biofiller is used in the composite, the properties of the cover board 10 more closely resemble the properties of polymer cover board, *i.e.* the board will have resilient and low moisture sensitivity and a density close to that of a polymer board. Conversely, when a large amount of biofiller is incorporated into the building material 10, the resulting cover board will be highly biodegradable and low density. Optionally, foaming agent can be introduced into the composite to further decrease the density of the coverboard. In preferred embodiments, additives such as heat stabilizers, plasticizers, flame retardants and other functional ingredients can be added in the composite to enhance the process or product performance.

In preferred embodiment, the cover board can be made by compression molding process or extrusion process. For molding process, small particle sizes of recycled plastic are preferred to shorten the molding process and minimize the flow distance needed. Pre-drying of the biofiller material before the molding press ensures consistent properties and production rate. The particle size of biofillers should match the particle size of the plastic to enable good mixing. For extrusion process, plastic pellets can be used. Pre-drying and maintaining a consistent low moisture level in the biofiller can ensure consistent and high production rates.

In preferred embodiments, optional top and bottom facers can be added to the mixture during the molding process or laminated to the mixture after it has been removed from the mold. These top and bottom facers may be made of polyethylene (PE), paper, glass matt, coated class facer, foil or other suitable facer materials, all keeping within the scope of the presently claimed invention.

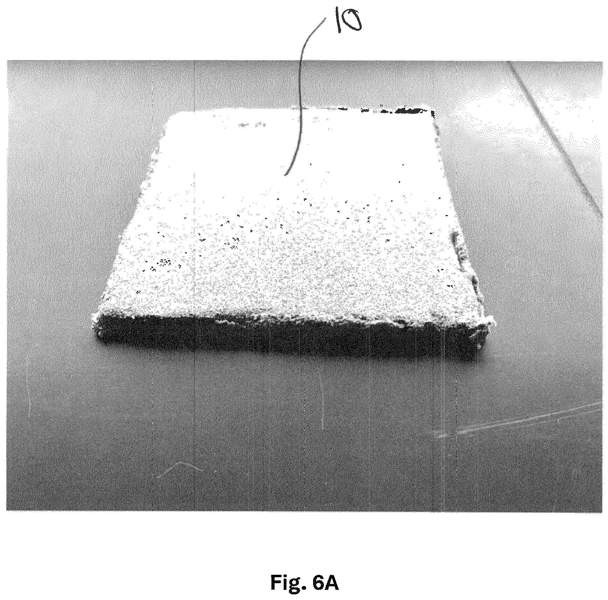

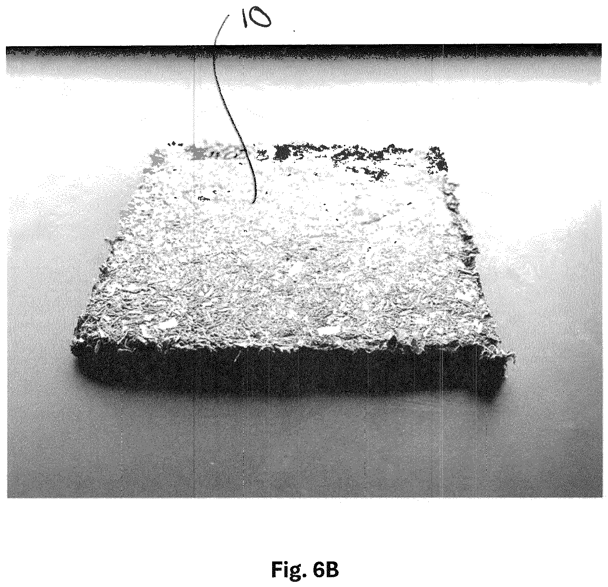

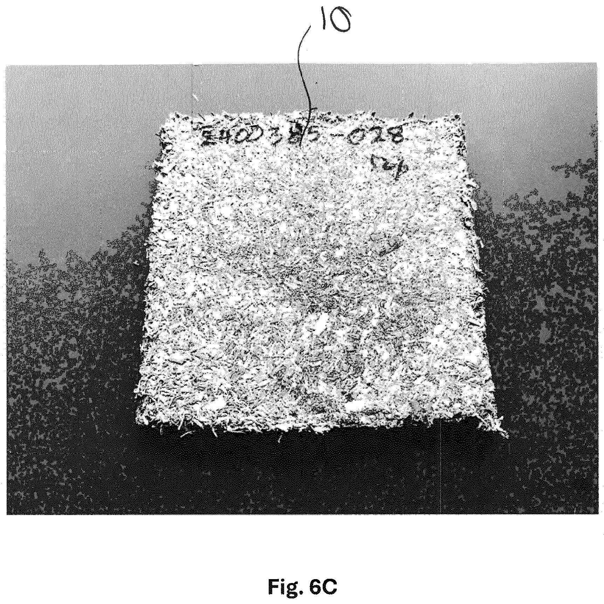

Figs. 6A, 6B and 6C are photos of different coverboard building materials 10 incorporating biofiller material therein as manufactured by the present inventors. In one preferred aspect, the cover board is produced according to the following steps:
(a) Pre-drying biofillers to moisture level < 5%. More preferably, to moisture level <3%. Most preferably, to moisture level < 2%.
(b) Mixing biofillers with recycled polymer, such as polyethylene (PE). Additives, such as heat stabilizers, free flow agents, lubricants, flame retardants and other functional ingredients, can also be added.
(c) Placing the resulting mixture into a mold or onto a belt press;
(d) Applying heat and pressure to the mixture, and then
(e) Removing from the mold or press equipment and allowing the mixture to cool.

As seen in the various Tables below, various biofillers can be used to make cover board at various ratios. The physical properties of the coverboard in a wide range show the good compression strength of a the coverboard. Finally, top and bottom facers may be added to the composite after the composite has made in the molding or extrusion process. For coverboards with facers, the top and bottom facer can be made of the same material or different materials. When thermoplastic sheets are used as the facer, they can optionally be melted to become indistinguishable from the matrix of the coverboard. For example, PE film can be used as the facer while recycled PE is used as the bind. When PE film is used as the facer, the film thickness can be 2 - 100 mils. Alternatively, paper, coated glass facer, foil, or composite facers can be used instead. These materials form good bonds with the polymer matrix and form composite with the matrix. When the top and bottom facers are made of different materials, a coated glass facer can be used as the top facer while paper facer can be used as the bottom facer.

Fig. 6A is a side photo of Sample 3 from Table 1, as produced by the present inventors. Fig. 6B is a side photo of Sample 7 from Table 2, as produced by the present inventors. Fig. 6C is a top photo of Sample 7 from Table 2, as produced by the present inventors.

**Table 1. Examples of formulations with rice husk powder and PE.**

| **Sample Name** | **Sample 1** | **Sample 2** | **Sample 3** | **Sample 4** |
|---|---|---|---|---|
| Rice husk weight (g) | 83.6 | 85.5 | 91.7 | 94.9 |
| PE weight (g) | 97.8 | 77.8 | 62.5 | 45.7 |
| Biofiller content by weight (%) | 46.1% | 52.4% | 59.5% | 67.5% |
| Measured thickness (in) | 0.35 | 0.36 | 0.38 | 0.36 |
| Board density (lb/ft3) | 47.5 | 45.3 | 40.0 | 40.6 |

**Table 2. Examples of formulations with coarse wood sawdust.**

| **Sample Name** | **Sample 5** | **Sample 6** | **Sample 7** | **Sample 8** |
|---|---|---|---|---|
| Coarse sawdust weight (g) | 61.6 | 71.1 | 76.0 | 80.9 |
| PE weight (g) | 110.8 | 83.1 | 69.1 | 55.2 |
| Biofiller content by weight (%) | 35.7% | 46.1% | 52.4% | 59.5% |
| Measured thickness (in) | 0.38 | 0.37 | 0.39 | 0.38 |
| Board density (lb/ft3) | 44.8 | 41.8 | 37.2 | 35.7 |

**Table 3. Examples of formulations with fine wood sawdust.**

| **Sample name** | **Sample 9** | **Sample 10** | **Sample 11** | **Sample 12** |
|---|---|---|---|---|
| Fine sawdust weight (g) | 61.6 | 71.1 | 76.0 | 80.9 |
| PE weight (g) | 110.8 | 83.1 | 69.1 | 55.2 |
| Biofiller content by weight (%) | 35.7% | 46.1% | 52.4% | 59.5% |
| Measured thickness (in) | 0.31 | 0.34 | 0.34 | 0.37 |
| Board density (lb/ft3) | 50.0 | 42.0 | 40.0 | 33.4 |

**Table 4. Compression strength of the coverboard with bio fillers.**

| **Sample Name** | **Polyiso HD** | **Sample 1** | **Sample 3** | **Sample 4** | **Sample 9** | **Sample 10** | **Sample 11** | **Sample 12** |
|---|---|---|---|---|---|---|---|---|
| Biofi ller content by weight (%) | | 46.1% | 59.5% | 67.5% | 35.7% | 46.1% | 52.4% | 59.5% |
| Compression strength (psi) | 95 | > 1000 | > 1000 | > 1000 | > 1000 | > 1000 | > 1000 | > 1000 |

Lastly, in various optional aspects other recycled thermoplastic binders can be used besides recycled polyethylene. For example, recycled ethylene copolymer with other alpha olefins, polypropylene, PVC, polyacrylates, polystyrene, EVA, etc. can also be used.
The following numbered paragraphs set out broad combinations of the inventive concepts herein disclosed:
1. A method of forming a building material, comprising:
   supplying a shredded or granulated or pulverized thermoplastic material, wherein the shredded or granulated or pulverized thermoplastic material includes post-industrial or post-consumer use thermoplastic material; and
   heating and compressing the shredded or granulated or pulverized thermoplastic material to form a rigid building material.
2. The method of paragraph 1, wherein the thermoplastic material is TPO.
3. The method of paragraph 1, further comprising:
   mixing fiber reinforcement material into the shredded or granulated thermoplastic material prior to the heating and compressing step.
4. The method of paragraph 3, wherein the fiber reinforcement material is TPO roofing membrane scrim.
5. The method of paragraph 1, further comprising:
   mixing any one of shredded or granulated PET, PVC, EPDM, tire rubber PET, polyethylene, polypropylene, polystyrene or glass fiber into the shredded or granulated or pulverized thermoplastic material prior to the heating and compressing step.
6. The method of paragraph 1, further comprising:
   mixing granulated or shredded insulation material into the shredded or granulated or pulverized TPO material prior to the heating and compressing step, wherein the granulated or shredded insulation material is between 5% and 50% of the total weight of the building material.
7. The method of paragraph 1, further comprising:
   mixing a solvent or water based adhesive binder into the shredded or granulated TPO material prior to the heating and compressing step.
8. The method of paragraph 1, further comprising:
   mixing foaming agents into the shredded or granulated TPO material, wherein the foaming agents are:
   water at 0.1 - 1% by weight;
   azodicarbonamide in ranges of 0.1%-2% by weight; or
   dinitrosopentamethylenetetramine in ranges of 0.2 - 3% by weight.
9. The method of paragraph 2, wherein supplying a shredded or granulated or pulverized thermoplastic material comprises:
   stacking layers of TPO material prior to heating and compressing the layers of stacked TPO material to form the rigid building material.
10. The method of paragraph 9, wherein the layers of TPO material have different colors such that a top surface of the building material has different color than a bottom surface of the building material.
11. The method of paragraph 1, wherein the building material has a thickness between 0.010 and 0.080 inches, further comprising:
   attaching any of a polyisocyanurate, foamed polyurethane, expanded polystyrene, extruded polystyrene, glass fiber, mineral fiber, or aerogel insulation onto the building material to form an insulation facer or an insulation coverboard.
12. The method of paragraph 11, further comprising:
   positioning a pair of thermoplastic roofing membranes side-by-side on top of the insulation coverboard such that the pair of thermoplastic roofing membranes have overlapping edges; and then
   welding each of the pair of thermoplastic roofing membranes onto the insulation coverboard and welding the overlapping edges of the thermoplastic roofing membranes together.
13. The method of paragraph 1, wherein the building material has a thickness between 0.080 and 0.75 inches for use as a coverboard or nailboard.
14. The method of paragraph 1, further comprising:
   texturing a top surface of the building material.
15. The method of paragraph 1, further comprising:
   mixing metallic particles into the shredded or granulated or pulverized thermoplastic material prior to the heating and compressing step; and then
   heating the metallic particles by induction welding to weld a thermoplastic roofing membrane onto the building material.
16. The method of paragraph 15, wherein the metallic particles are concentrated in a top layer of the building material.
17. The method of paragraph 1, further comprising:
   applying top and bottom facers to the building material, wherein the top and bottom facers are made of different materials.
18. The method of paragraph 1, further comprising:
   mixing biofiller into the shredded or granulated or pulverized thermoplastic material prior to the heating and compressing step.
19. The method of paragraph 18, wherein the biofiller comprises between 30% and 70% of the weight of the building material.
20. The method of paragraph 19, wherein the biofiller is sawdust, rice husks or coconut fibers.

## Claims

1. A method of forming a building material, comprising:
supplying a shredded or granulated or pulverized thermoplastic material, wherein the shredded or granulated or pulverized thermoplastic material includes post-industrial or post-consumer use thermoplastic material; and
heating and compressing the shredded or granulated or pulverized thermoplastic material to form a rigid building material.

2. The method of claim 1, wherein the thermoplastic material is TPO.

3. The method of claim 1, further comprising:
mixing fiber reinforcement material into the shredded or granulated thermoplastic material prior to the heating and compressing step,
and optionally wherein the fiber reinforcement material is TPO roofing membrane scrim.

4. The method of claim 1, further comprising:
mixing any one of shredded or granulated PET, PVC, EPDM, tire rubber PET, polyethylene, polypropylene, polystyrene or glass fiber into the shredded or granulated or pulverized thermoplastic material prior to the heating and compressing step.

5. The method of claim 1, further comprising:
mixing granulated or shredded insulation material into the shredded or granulated or pulverized TPO material prior to the heating and compressing step, wherein the granulated or shredded insulation material is between 5% and 50% of the total weight of the building material.

6. The method of claim 1, further comprising:
mixing a solvent or water based adhesive binder into the shredded or granulated TPO material prior to the heating and compressing step.

7. The method of claim 1, further comprising:
mixing foaming agents into the shredded or granulated TPO material, wherein the foaming agents are:
water at 0.1 - 1% by weight;
azodicarbonamide in ranges of 0.1%-2% by weight; or
dinitrosopentamethylenetetramine in ranges of 0.2 - 3% by weight.

8. The method of claim 2, wherein supplying a shredded or granulated or pulverized thermoplastic material comprises:
stacking layers of TPO material prior to heating and compressing the layers of stacked TPO material to form the rigid building material,
and optionally wherein the layers of TPO material have different colors such that a top surface of the building material has different color than a bottom surface of the building material.

9. The method of claim 1, wherein the building material has a thickness between 0.010 and 0.080 inches, further comprising:
attaching any of a polyisocyanurate, foamed polyurethane, expanded polystyrene, extruded polystyrene, glass fiber, mineral fiber, or aerogel insulation onto the building material to form an insulation facer or an insulation coverboard.

10. The method of claim 10, further comprising:
positioning a pair of thermoplastic roofing membranes side-by-side on top of the insulation coverboard such that the pair of thermoplastic roofing membranes have overlapping edges; and then
welding each of the pair of thermoplastic roofing membranes onto the insulation coverboard and welding the overlapping edges of the thermoplastic roofing membranes together.

11. The method of claim 1, wherein the building material has a thickness between 0.080 and 0.75 inches for use as a coverboard or nailboard.

12. The method of claim 1, further comprising:
texturing a top surface of the building material.

13. The method of claim 1, further comprising:
mixing metallic particles into the shredded or granulated or pulverized thermoplastic material prior to the heating and compressing step; and then
heating the metallic particles by induction welding to weld a thermoplastic roofing membrane onto the building material,
and optionally wherein the metallic particles are concentrated in a top layer of the building material.

14. The method of claim 1, further comprising:
applying top and bottom facers to the building material, wherein the top and bottom facers are made of different materials.

15. The method of claim 1, further comprising:
mixing biofiller into the shredded or granulated or pulverized thermoplastic material prior to the heating and compressing step,
and optionally wherein the biofiller comprises between 30% and 70% of the weight of the building material,
and optionally wherein the biofiller is sawdust, rice husks or coconut fibers.
